# EUROPEAN PATENT SPECIFICATION

(11) **EP 4 388 240 B1**
(45) Date of publication and mention of the grant of the patent: **15.07.2026**
(21) Application number: 22860786.7
(22) Date of filing: 22.08.2022
(51) Int. Cl.: A01N 1/14, A01N 1/142, A01N 1/144, A01N 1/145, A01N 1/147, F17C 3/08, F17C 5/02

(54) **AUTOMATED BIOLOGICAL SAMPLE VITRIFICATION, STORAGE AND THAWING SYSTEM**
AUTOMATISIERTES SYSTEM ZUM VITRIFIZIEREN, LAGERN UND AUFTAUEN BIOLOGISCHER PROBEN
SYSTÈME AUTOMATISÉ DE VITRIFICATION, STOCKAGE ET DÉCONGÉLATION D'ÉCHANTILLONS BIOLOGIQUES

(30) Priority: 22.08.2021 US 202163235764 P
(43) Date of publication of application: 26.06.2024
(73) Proprietor: Crinsurance S.A.S., La Plata, BS AS - (1900) (AR); National Scientific and Technical Research Council Conicet, Caba, C1425FQB (AR)
(72) Inventor: SLOBINSKY, Demian Gustavo, La Plata, Bs As - CP 1900 (AR); PERALTA, Juan Pablo, La Plata, 1900 (AR)
(74) Representative: De Clercq & Partners
(86) International application number: PCT/IL2022/050917
(87) International publication number: WO 2023/026282

(56) References cited:
- EP-B1- 2 492 663
- WO-A1-2020/033578
- WO-A1-2020/165909
- DE-B4- 102016 124 723
- US-A1- 2002 023 444
- US-A1- 2016 084 564
- US-A1- 2018 024 032
- US-A1- 2021 086 978
- US-A1- 2021 254 879

## Description

### FIELD OF THE INVENTION

Present invention relates to cryogenic equipment and, more particularly to cryopreservation systems for conserving reproductive cells and embryos.

### BACKGROUND OF THE INVENTION

Cryopreservation is a technique used to preserve biological material over time and be used later, maintaining the same characteristics as when it was cryopreserved. For this purpose Dewars or insulated tanks capable of storing cryogen are used in industry and science to cryopreserve samples at temperatures below 100 K.

There exist several cryopreservation technologies among which one can count slow freezing and vitrification. The later has an extraordinary survival rate and is becoming standard in most assisted reproduction technologies labs. Hence, throughout the life of a sample that has been cryopreserved, it has had to be vitrified and thawed. Vitrification is the technique by which cryoprotectants are added to the sample to allow it to be frozen without undergoing crystallization and breakage. Instead, thawing is the technique of recovering from vitrification expelling the cryoprotectant in a control way in order to preserve its characteristics at the time it was cryopreserved.

Vitrification, cryopreservation and thawing techniques are mostly carried out in an artisanal way, where the user's experience determines the probability that this sample will maintain its intrinsic characteristics after vitrification / thawing. In addition, these techniques require that the samples be cooled (vitrification) and heated (thawing) quickly, which leads to the need for cryogen sources additional to those stored in the Dewars or tanks.

In order to preserve the characteristics of a sample that must be cryopreserved to be used in the future for a certain purpose and to dispense with cryogen for the performance of these procedures, there is a need to automate the vitrification, storage and thawing process on the basis of reusing the evaporated cryogen, in addition to handling the samples to be vitrified, stored and thawed for later use.

WO2020165909 discloses a cryogenic device for storing biological material containers: (a) a sealed cryogenic Dewar vessel accommodating a liquefied gas in an inner space thereof; (b) a matrix of receptacles disposed in the inner space and configured for receiving and storing biological material containers; (c) means for loading and retrieving the biological material containers; the means comprising a linear cane manipulator configured for loading and retrieving the biological material containers within the matrix. The means comprises an airlock isolating the inner space from an outer environment surrounding the sealed cryogenic Dewar vessel. The airlock is configured for passing the biological material containers manipulated by the linear cane manipulator therethrough in a sealed manner.

The receptacles are carried by a first carousel member rotatable around an axis thereof.

US 20190008142 discloses automatic devices configured to perform a cryoprocedure on at least one biological sample carried by one or more carriers. The device includes a carrier holder, a container holder, a carrier driver and a container driver. The carrier holder holds the one or more carriers in an upright orientation while holding the at least one biological sample. The container holder holds two or more containers each in a predetermined location on the container holder. The carrier driver translates the carrier holder and the container driver translates the predetermined locations so as to position one of them in a position accessible to the carrier holder, so as to enable the carrier driver to submerge an active portion of each one or more carriers held by the carrier holder in a predetermined vertical depth in the position accessible to the carrier holder.

Each biological sample before placing into the cryogenic environment should be gradually vitrified according to a predetermined protocol. Similar to the placing the biological sample, a biological sample retrieved from the cryogenic environment undergoes heating up to the room temperature. Thus, there is a long-felt and unmet need for providing an integrally-arranged storage cryogenic system configured for automatic vitrification preventing the biological material to be stored from crystallization and destroying its structure and gradual thawing the aforesaid biological material before retrieving it.

### SUMMARY OF THE INVENTION

It is hence one object of the invention to disclose cryogenic device for vitrifying, storing and thawing biological materials. The aforesaid device comprises: (a) a sealed cryogenic Dewar vessel accommodating a liquefied cryogen in an inner space thereof; (b) a cryocooler configured for reliquefying a vaporized phase said liquefied cryogen; (c) a first carousel-shaped member mounted within sealed cryogenic Dewar vessel; said first carousel-shaped member carrying receptacles configured for receiving and storing biological material containers; said carousel-shaped member having a rotation axis and rotatable therearound; (d) a loading and retrieving arrangement comprising a linear manipulator configured for loading said biological material containers into said receptacles and retrieving said biological material containers therefrom and a cryogenic valve configured for isolating said sealed cryogenic Dewar vessel from an environment and openable for loading and retrieving said biological material carriers.

The loading and retrieving arrangement is rotatable around an axis disposed at R₁ from said rotation axis of said first carousel member on an arm of R₂ length; said receptacles are located within an annular area defined by two coaxially arranged circumferences of radii of R₁-R₂ and R₁+R₂.

It is a core purpose of the invention to provide the loading and retrieving arrangement further comprises a vitrification and thawing sub-arrangement further comprising a housing having an openable door and a second carousel-shaped member rotatably disposed therewithin; said second carousel-shaped member carries containers configured for accommodating vitrifying consumables for vitrifying biological material containers to be placed into the cryogenic environment and at least one heater for heating biological material containers to be retrieved from said device. The second carousel-shaped member has a side recess providing an access of said linear manipulator to said receptacles carried by said first carousel-shaped member. Another object of the invention is to disclose the second carousel-shaped member linearly movable between first and second positions thereof; at said first position, said second carousel-shaped member is projected outward via said openable door being open and consumables are loaded into and unloaded from said second carousel member. The biological materials accommodated in biological material carriers are connected or disconnected to said linear manipulator at said second position, said openable door is closed, said second carousel-shaped member is positioned in coordination with said linear manipulator such that said biological material carriers accommodating said biological materials are insertable by said linear manipulator in said vitrifying consumables of interest in the course of vitrification said biological material or into said thawing consumable in the course of thawing said biological materials from said device.

A further object of the invention is to disclose the consumables comprising a number of solutions and absorbents configured for gradually changing the concentration of cryoprotectant preventing crystallization of said biological materials in the course of said placing said biological materials into said device.

A further object of the invention is to disclose the consumables comprising a number of solutions and absorbents configured for gradually thawing said biological material in the course of retrieving thereof from said device.

A further object of the invention is to disclose the device comprising a replaceable disposable member having receptacles accommodating said consumables and mountable onto said second carousel-shaped member.

A further object of the invention is to disclose the first carousel-shaped member comprising an entry-and-exit station having at least one receptacle bathed into a cryogen for placing said biological material holders to be placed within said receptacles of said carousel-shaped member or to be withdrawn therefrom.

A further object of the invention is to disclose the device comprising a float configured for measuring a level of said cryogen within said sealed cryogenic Dewar vessel.

A further object of the invention is to disclose the linear manipulator comprising a magnetic hook configured for grabbing, transporting and releasing said biological material containers.

A further object of the invention is to disclose the device comprising an antenna for identifying said biological material containers provided with RFID tags.

A further object of the invention is to disclose a method of storing biological materials. The aforesaid method comprises steps of: (a) providing a cryogenic device for storing biological materials; said device comprising: (i) a sealed cryogenic Dewar vessel accommodating a liquefied cryogen in an inner space thereof; (ii) a cryocooler configured for reliquefying a vaporized phase said liquefied cryogen; (iii) a first carousel-shaped member mounted within sealed cryogenic Dewar vessel; said first carousel-shaped member carrying receptacles configured for receiving and storing biological material containers; said carousel-shaped member having a rotation axis and rotatable therearound; (iv) a loading and retrieving arrangement comprising a linear manipulator configured for loading said biological material containers into said receptacles and retrieving said biological material containers therefrom; said loading and retrieving arrangement is rotatable around an axis disposed at R₁ from said rotation axis of said carousel member on an arm of R₂ length; said receptacles are located within an annular area defined by two coaxially arranged circumferences of radii of R₁-R₂ and R₁+R₂; the loading and retrieving arrangement further comprises a vitrification and thawing sub-arrangement further comprising a housing having an openable door and a second carousel-shaped member rotatably disposed therewithin; said second carousel-shaped member carries containers configured for accommodating vitrifying or thawing consumables for vitrifying or thawing biological material containers to be placed into or retrieved from the cryogenic environment and at least one heater for heating the thawing consumable to a predefined temperature for complying with a given thawing protocol; said second carousel-shaped member has a side recess providing an access of said linear manipulator to said receptacles carried by said first carousel-shaped member; (b) vitrifying said biological materials accommodated within said biological material carriers within said vitrification and thawing sub-arrangement; (c) transporting vitrified said biological material carriers with vitrified biological materials from said vitrification and thawing sub-arrangement into said sealed cryogenic Dewar vessel; (d) placing said biological material carriers into said receptacles of said first carousel-shaped member; (e) storing said biological material carriers; (f) retrieving said biological material carriers from said sealed cryogenic Dewar vessel; and (g) thawing said biological materials accommodated within said biological material carriers within said vitrification and thawing sub-arrangement.

The aforesaid method comprises a step of linearly moving said second carousel-shaped member between first and second positions; in said first position, said second carousel-shaped member is projected outward via said openable door being open and consumables are loaded into and unloaded from said second carousel member; said biological materials accommodated in biological material carriers are connected or disconnected to said linear manipulator; in said second position, said openable door is closed, said second carousel-shaped member is positioned in coordination with said linear manipulator such that said biological material carriers accommodating said biological materials are insertable by said linear manipulator in said vitrifying consumables of interest in the course of vitrification said biological material or into said heater in the course of thawing said biological materials from said device.

A further object of the invention is to disclose the step of transporting vitrified said biological material containers comprises orienting said side recess of second carousel-shaped member relative to said cryogenic valve in order to provide said access of said linear manipulator to said receptacles of said first carousel-shaped member.

### BRIEF DESCRIPTION OF THE DRAWINGS

In order to understand the invention and to see how it may be implemented in practice, a plurality of embodiments is adapted to now be described, by way of non-limiting example only, with reference to the accompanying drawings, in which
Fig. 1 is a front view of an overall view of a cryogenic device for storing biological materials;
Fig. 2a is an isometric exploded view of the interior arrangement of the cryogenic device for storing biological materials;
Fig. 2b is an isometric view of a rotary drive of a loading and retrieving arrangement;
Fig. 2c is an isometric view of entry-and-exit station;
Fig. 3 is a schematic geometric diagram of a cryogenic device for storing biological materials;
Fig. 4 is a general isometric view of a loading and retrieving arrangement;
Fig. 5a is an enlarged view of a vitrification-and-thawing carousel of the automated arm system arrangement;
Fig. 5b is a top view of a vitrification-and-thawing carousel arrangement;
Fig. 5c is an isometric view of a vitrification-and-thawing carousel arrangement from below;
Fig. 6 is an isometric view of a replaceable disposable member and mountable onto a vitrification-and-thawing carousel; and
Figs 7a and 7b present general and enlarged isometric views of a magnetic hand of a linear manipulator.

### DETAILED DESCRIPTION OF THE INVENTION

The following description is provided, so as to enable any person skilled in the art to make use of the invention and sets forth the best modes contemplated by the inventor of carrying out this invention. Various modifications, however, are adapted to remain apparent to those skilled in the art, since the generic principles of the present invention have been defined specifically to provide a cryogenic device for storing biological materials and a method of implementing the same.

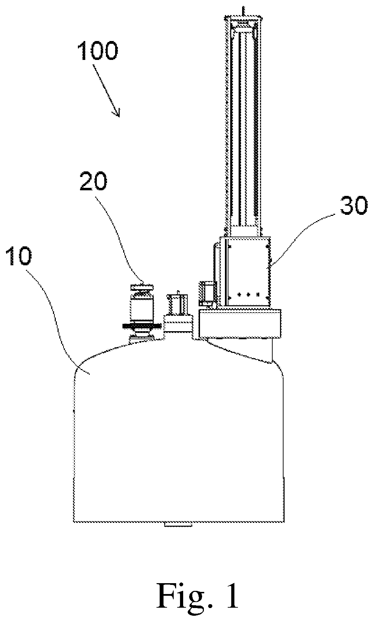

Reference is made to Fig. 1 presenting cryogenic device 100 for storing biological materials. The aforesaid device comprises sealed cryogenic Dewar vessel 10 accommodating a liquefied cryogen in its inner space, cryocooler 20 configured for reliquefying a vaporized phase said liquefied cryogen and loading and retrieving arrangement 30.

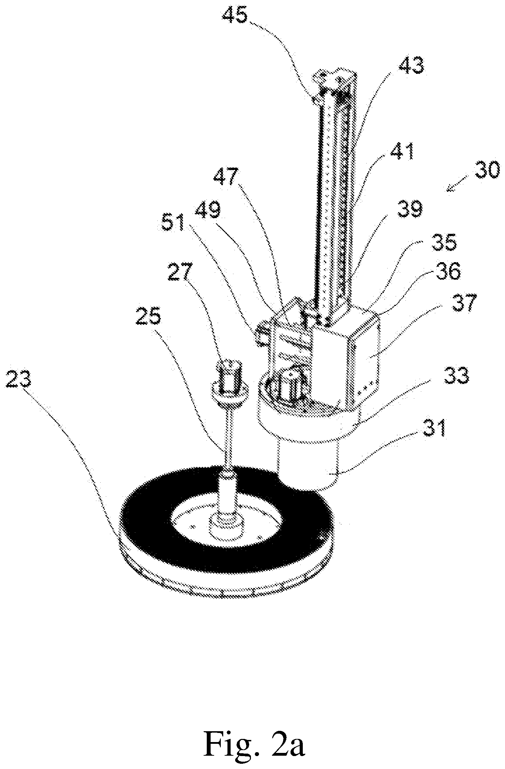

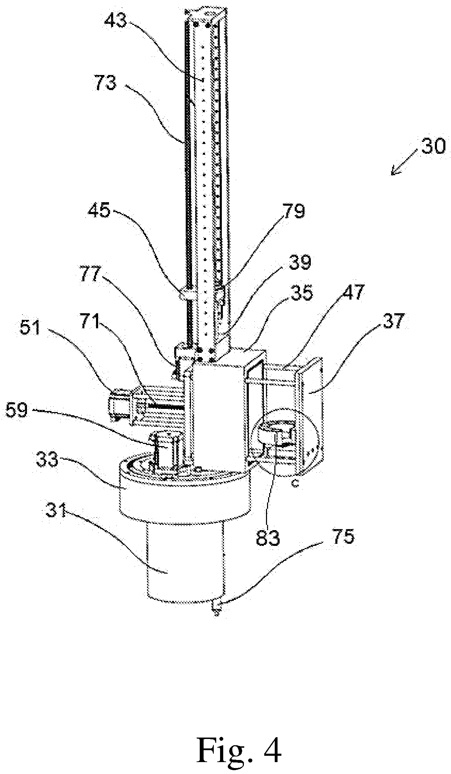

Reference is now made to Figs 2a to 2c presenting the interior arrangement of cryogenic device 100. Specifically, Fig. 2a shows first carousel-shaped member 23 rotatable by shaft 25 driven by motor 27. Loading and retrieving arrangement 30 comprises linear manipulator 39 and air lock 35. Numeral 31 refers to a convection and radiation shield made on Styrofoam and Multilayer isolation. Loading and retrieving arrangement 30 is rotatably mounted on bearings 33. Air lock 35 is provided with door 37 sealed by sealing member 36 along its perimeter when closed acting as one of the valves of the air-lock, and openable by the mechanism including screws 71 shown in Fig. 4 and driven motor 51 in nuts 49 such that column 47 push door 37 aside and provide an access into air lock 35. The structural features of linear manipulator 39 are described in detail below.

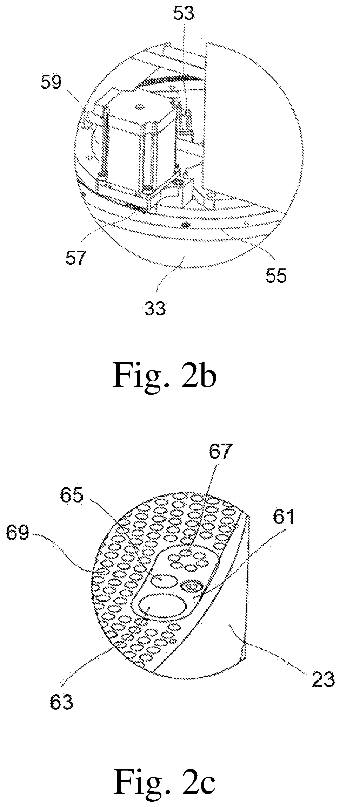

Reference is now made to Fig. 2b presenting a rotating mechanism of loading and retrieving arrangement 30. As mentioned above, arrangement 30 is mounted on bearings 33. Motor 59 rotates gear 57 which is in permanent engagement with crown 55. Therefore, the loading and retrieving arrangement 30 is 360°-rotatable around its axis.

Reference is now made to Fig. 2c presenting a partial enlarged view of first carousel-shaped member 23 having a plurality of circumferentially arranged receptacles 69. The aforesaid receptacles are configured for receiving biological material containers (not shown). First carousel-shaped member 23 is provided with input-output station 61 for temporary placement of the biological material containers. Vitrified biological material containers are quickly transported inside sealed cryogenic Dewar vessel 10 and positioned at receptacles 67 for temporary placement before placement in storing receptacles 69 retrieving from sealed cryogenic Dewar vessel 10. Input-output station 61 is provided with receptacle 63 for a transport container (not shown) configured for transporting biological material containers to allow for bypassing the vitrification or thawing procedures in the case of placing a sample from another system or retrieving a sample for continuing storing at a different system. Numeral 65 refers to a receptacle to insert a float that allows the cryogen level to be measured.

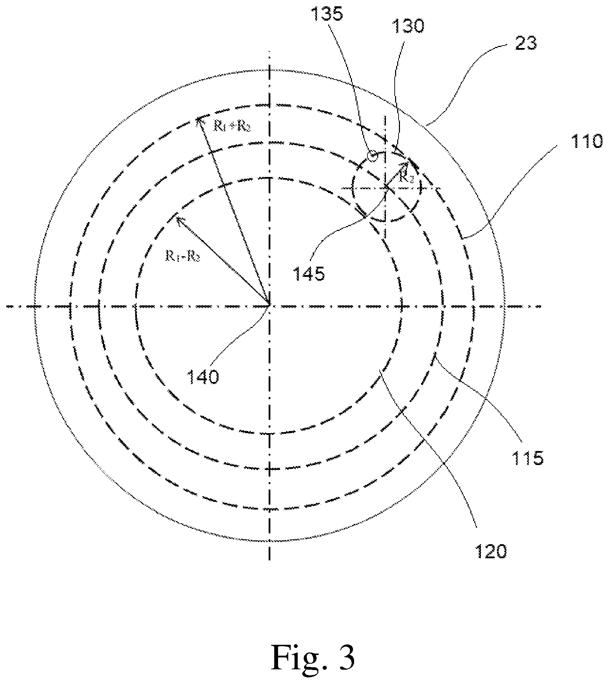

Reference is now made to Fig. 3 presenting a geometric arrangement of the disclosed device for storing biological materials. First carousel member 23 is arranged such that receptacles for storing biological material containers are disposed between circumferences 110 and 120 having their centers on rotation axis 140 of first carousel member 23. Numeral 145 refers to a rotational axis of loading and retrieving arrangement 30 which rotates around axis 140 along trajectory 115. Axis 145 is distanced from axis 140 by R₁. The linear manipulator is movable in the direction perpendicular to this diagram. An optional position of the linear manipulator rotatable around axis 145 is numbered by 135. Thus, an access to the storing receptacles is provided by the arrangement having three degrees of freedom. Specifically, two rotational degrees of freedom implemented due to rotations around axes 140 and 145 while a translational degree of freedom is provided by the linear manipulator.

In references to the combination of figures 2 and 3, the biological material containers are placed to and retrieved from first carousel-shaped member 23 by means of linear manipulator 39. As mentioned above, the system has 3 degrees of freedom, first carousel-shaped member 23 rotates around its rotational axis by means of a motor 27 that transmits power through a shaft 25. In turn, loading and retrieving arrangement 30 has two degrees of freedom. Specifically, motor 59 moves pinion 57 that pulls crown 55 fixed to the housing of the bearings 33 such that loading and retrieving arrangement 30 is 360°-rotatable around its rotational axis. It should be appreciated that the disclosed geometric arrangement provides an access to any storing receptacle located on first carousel-shaped member 23 between circumferences having radii of R₁-R₂ and R₁+R₂ (see Fig. 3).

Reference is now made to Fig. 4 presenting loading and retrieving arrangement 30 in detail. Linear manipulator 39 includes slider 79 linearly movable along linear guides 43. Slider 79 is mechanically connected to nut 45 threadly engaged with screw 73 driven by motor 77. Air lock 35 is shown with door 37 in the open position which provides an access to second carousel-shaped member 83 for vitrifying and thawing the biological material accommodating in the containers to be placed in the cryogenic environment and or to be retrieved from the aforesaid cryogenic environment.

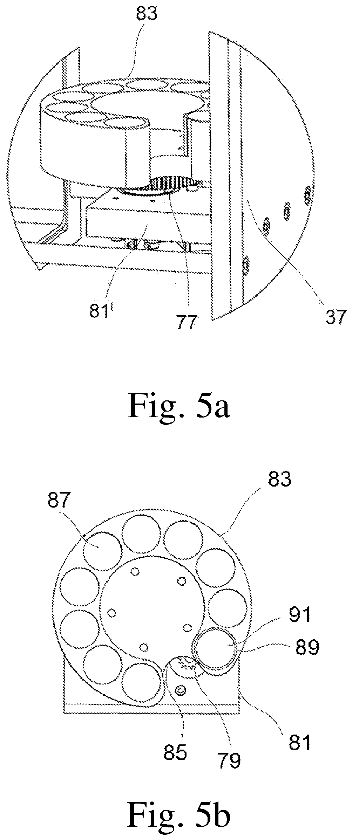

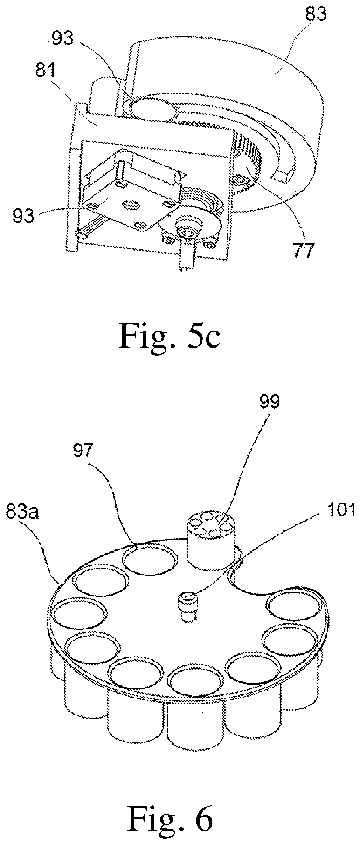

Reference is now made to Figs 5a to 5c presenting isometric and top views of second carousel-shaped member 83. In Fig. 6, numeral 83a refers to a replaceable disposable member mountable onto second carousel-shaped member 83 that can be provided in a preloaded condition. According to one embodiment of the present invention, member 83 has containers 97 accommodating the consumables usable for vitrification. According to another embodiment of the present invention, member 83 has containers 97 accommodating the consumables usable for thawing the biological material. Station 99 is configured for disposing biological material containers before or after procedures of vitrifying or thawing. Protuberance 101 is used for manual handling the replaceable disposable carousel-shaped member 83a onto member 83.

The aforesaid second carousel-shaped member is provided with a number of cavities 87 configured for receiving containers 97 of member 83 when mounted thereon. Second carousel-shaped member 83 is mounted on support 81 and rotatable by a motor 93 via gears 77 and 79. Numeral 91 refers to a heater mounted in container 89. In the course of loading biological material containers (not shown) carried by linear manipulator 39 (Fig. 4), the aforesaid biological material containers are successively dipped into the number of containers 97 accommodating vitrification or thawing consumable according to a predetermined protocol such that the biological materials are properly vitrified or thawed. Vitrification and thawing concept can be found in US 20190008142 and S. Yavin, Measurement of Essential Physical Properties of Vitrification Solutions, Theriogenology 67 (2007) 81-89. Successive change of containers 97 available for dipping the biological materials thereinto is achieved due to rotation of second carousel-shaped member 83 while linear manipulator 39 is in steady position. In the course of thawing, the thawing consumable and the solutions within are thermalized to a predefined temperature using the heater 91. Once the temperature is the correct one for the elected thawing protocol, the biological material containers are inserted into the thawing consumable and alternated within the different thawing solutions in containers 97 by rotation of the second-carousel member 83 before withdrawal from system 100. It should be emphasized that the described procedures of vitrifying and thawing the biological material accommodated in the biological material carrier are performed with closed door 37. In this case is the vitrifying/thawing position such that containers 87 and heater 91 are positionable under linear manipulator 39 by rotating second carousel-shaped member 83.

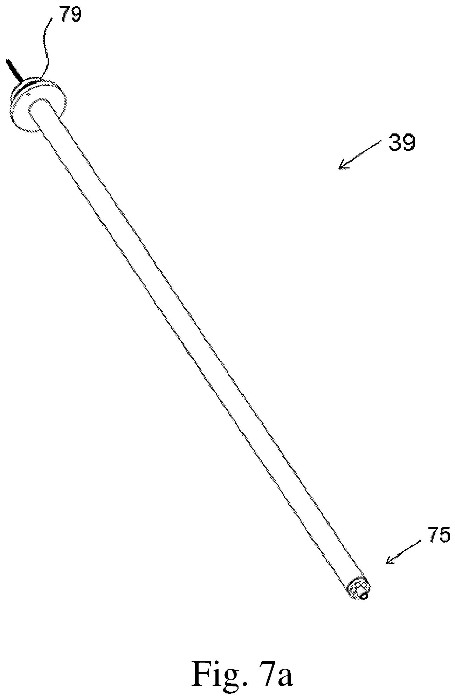

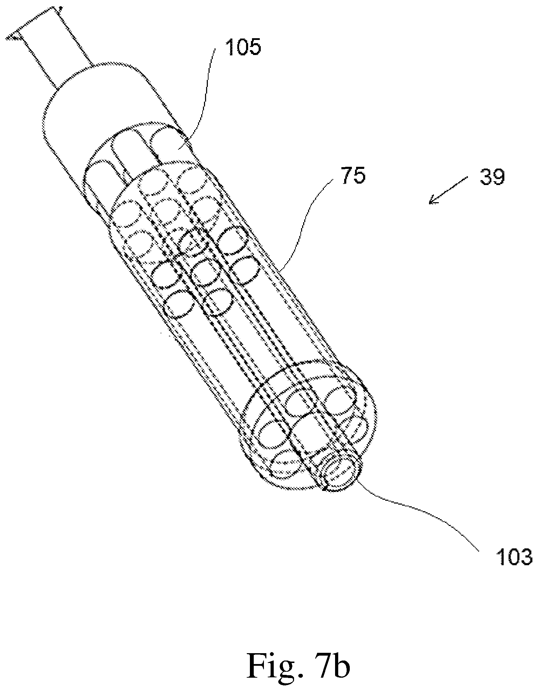

Reference is now made to Figs 7a and 7b presenting linear manipulator 39. As shown in Fig. 4, slider 39 is mechanically connected to nut 45 linearly movable by screw 73. Therefore, an operational stroke of linear manipulator 39 is along its axis. Linear manipulator 39 is provided at its distal end with magnetic hand 75 including axial magnetic hook 103 and off-axis magnetic hooks 105. Magnetic hooks are configured for gripping the biological material containers manipulating them in the course of vitrification, placement, retrieving and thawing the biological material accommodated in the biological material containers which may have a high permeability material in order to engage magnetically.

While the invention has been particularly shown and described with reference to an embodiment thereof, it will be appreciated by those skilled in the art that various changes in form and detail may be made without departing from the scope of the invention as defined by the appended claims.

## Claims

1. A cryogenic device for vitrifying, storing and thawing biological materials; said device comprising:
a. a sealed cryogenic Dewar vessel (10) accommodating a liquefied cryogen in an inner space thereof;
b. a cryocooler (20) configured for reliquefying a vaporized phase said liquefied cryogen;
c. a first carousel-shaped member (23) mounted within sealed cryogenic Dewar vessel (10); said first carousel-shaped member carrying receptacles (69) configured for receiving and storing biological material containers; said carousel-shaped member having a rotation axis and rotatable therearound;
d. a loading and retrieving arrangement (30) comprising a linear manipulator (39) configured for loading said biological material containers into said receptacles (69) and retrieving said biological material containers therefrom and a cryogenic valve (35) configured for isolating said sealed cryogenic Dewar vessel (10) from an environment and openable for loading and retrieving said biological material containers;
**characterized in that**
said loading and retrieving arrangement (30) is rotatable around an axis (145) disposed at R₁ from said rotation axis of said first carousel member (23) on an arm of R₂ length;
said receptacles (69) are located within an annular area defined by two coaxially arranged circumferences of radii of R₁-R₂ and R₁+R₂;
said loading and retrieving arrangement further comprises a vitrification and thawing sub-arrangement further comprising a housing having an openable door (37) and a second carousel-shaped member (83) rotatably disposed therewithin;
said second carousel-shaped member (83) carries containers (97) configured for accommodating vitrifying or thawing consumables for vitrifying or thawing biological material containers to be placed into or retrieved from the cryogenic environment and at least one heater for heating the thawing consumable to a predefined temperature for complying with a given thawing protocol;
said second carousel-shaped member (83) has a side recess providing an access of said linear manipulator (39) to said receptacles (69) carried by said first carousel-shaped member (23).

2. The device according to claim 1, wherein said consumables comprise a number of solutions configured for preventing crystallization of said biological materials in the course of said placing said biological materials into said device.

3. The device according to claim 1, wherein said consumables comprise a number of solutions configured for gradually thawing said biological material in the course of retrieving thereof from said device.

4. The device according to claim 3 comprising a replaceable disposable member (83a) having receptacles (97) accommodating said consumables and mountable onto said second carousel-shaped member (83).

5. The device according to claim 1, wherein said first carousel-shaped member (23) comprises an entry-and-exit station (61) having at least one receptacle (63) for placing said biological material holders to be placed within said receptacles (69) of said carousel-shaped member (23) or to be withdrawn therefrom.

6. The device according to claim 1 comprising a float configured for measuring a level of said cryogen within said sealed cryogenic Dewar vessel (10).

7. The device according to claim 1, wherein said linear manipulator (39) comprises a magnetic hook configured for grabbing, transporting and releasing said biological material containers.

8. The device according to claim 1 comprising an antenna for identifying said biological material containers provided with RFID tags.

9. A method of storing biological materials; said method comprising steps of:
a. providing a cryogenic device for storing biological materials; said device comprising:
i. a sealed cryogenic Dewar vessel (10) accommodating a liquefied cryogen in an inner space thereof;
ii. a cryocooler (20) configured for reliquefying a vaporized phase said liquefied cryogen;
iii. a first carousel-shaped member (23) mounted within sealed cryogenic Dewar vessel (10); said first carousel-shaped member carrying receptacles (69) configured for receiving and storing biological material containers; said carousel-shaped member having a rotation axis and rotatable therearound;
iv. a loading and retrieving arrangement (30) comprising a linear manipulator (39) configured for loading said biological material containers into said receptacles (69) and retrieving said biological material containers therefrom;
**characterized in that**
said loading and retrieving arrangement (30) is rotatable around an axis (145) disposed at R₁ from said rotation axis of said carousel member (23) on an arm of R₂ length;
said receptacles (69) are located within an annular area defined by two coaxially arranged circumferences of radii of R₁-R₂ and R₁+R₂;
said loading and retrieving arrangement further comprises a vitrification and thawing sub-arrangement further comprising a housing having an openable door (37) and a second carousel-shaped member (83) rotatably disposed therewithin;
said second carousel-shaped member (83) carries containers (97) configured for accommodating vitrifying or thawing consumables for vitrifying or thawing biological material containers to be placed into or retrieved from the cryogenic environment and at least one heater for heating the thawing consumable to a predefined temperature for complying with a given thawing protocol;
said second carousel-shaped member (83) has a side recess providing an access of said linear manipulator (39) to said receptacles (69) carried by said first carousel-shaped member (23);
b. vitrifying said biological materials accommodated within said biological material containers within said vitrification and thawing sub-arrangement;
c. transporting vitrified said biological material containers with vitrified biological materials from said vitrification and thawing sub-arrangement into said sealed cryogenic Dewar vessel (100);
d. placing said biological material containers into said receptacles (69) of said first carousel-shaped member (23);
e. storing said biological material containers;
f. retrieving said biological material containers from said sealed cryogenic Dewar vessel (10); and
g. thawing said biological materials accommodated within said biological material containers within said vitrification and thawing sub-arrangement;
wherein said method comprises a step of linearly moving said second carousel-shaped member (83) between first and second positions; in said first position, said second carousel-shaped member is projected outward via said openable door (37) being open and consumables (97) are loaded into and unloaded from said second carousel member; said biological materials accommodated in biological material containers are connected or disconnected to said linear manipulator (39); in said second position, said openable door (37) is closed, said second carousel-shaped member (83) is positioned in coordination with said linear manipulator (39) such that said biological material containers accommodating said biological materials are insertable by said linear manipulator in said vitrifying consumables of interest in the course of vitrification said biological material or into said heater in the course of thawing said biological materials from said device.

10. The method according to claim 9, wherein said step of transporting said vitrified biological material containers comprises orienting said side recess of second carousel-shaped member (83) relative to said cryogenic valve (35) in order to provide said access of said linear manipulator (39) to said receptacles (69) of said first carousel-shaped member (23).

## Patentansprüche

1. Tieftemperaturvorrichtung zum Vitrifizieren, Lagern und Auftauen biologischer Materialien; wobei die Vorrichtung umfasst:
a. ein abgedichtetes Tieftemperatur-Dewargefäß (10), das ein verflüssigtes Kryogen in einem Innenraum davon fasst;
b. einen Kryokühler (20), gestaltet zum Wiederverflüssigen einer verdampften Phase des verflüssigten Kryogens;
c. ein erstes karussellförmiges Element (23), das in dem abgedichteten Tieftemperatur-Dewargefäß (10) montiert ist; wobei das erste karussellförmige Element Aufnahmen (69) trägt, die zum Aufnehmen und Lagern von Behältern für biologisches Material gestaltet sind; wobei das karussellförmige Element eine Drehachse aufweist und darum drehbar ist;
d. eine Lade- und Entnahmeanordnung (30), umfassend einen Linearmanipulator (39), der zum Laden der Behälter für biologisches Material in die Aufnahmen (69) und Entnehmen der Behälter für biologisches Material daraus gestaltet ist, und ein Tieftemperaturventil (35), das zum Isolieren des abgedichteten Tieftemperatur-Dewargefäßes (10) von einer Umgebung gestaltet ist und zum Laden und Entnehmen der Behälter für biologisches Material geöffnet werden kann;
**dadurch gekennzeichnet, dass**
die Lade- und Entnahmeanordnung (30) um eine Achse (145) drehbar ist, die bei R₁ von der Drehachse des ersten Karussellelements (23) an einem Arm mit der Länge R₂ angeordnet ist;
die Aufnahmen (69) innerhalb eines ringförmigen Bereichs angeordnet sind, der durch zwei koaxial angeordnete Umfänge mit Radien von R₁-R₂ und R₁+R₂ definiert ist;
die Lade- und Entnahmeanordnung ferner eine Vitrifizierungs- und Auftau-Teilanordnung umfasst, die ferner ein Gehäuse mit einer öffenbaren Tür (37) und einem zweiten karussellförmigen Element (83), das drehbar darin angeordnet ist, umfasst;
das zweite karussellförmige Element (83) Behälter (97) trägt, die zum Fassen von Vitrifizierungs- oder Auftau-Verbrauchsmaterialien zum Vitrifizieren oder Auftauen von Behältern für biologisches Material, die in die Tieftemperaturumgebung platziert oder daraus entnommen werden sollen, gestaltet sind, und wenigstens eine Heizung zum Erwärmen des Auftau-Verbrauchsmaterials auf eine vorgegebene Temperatur zum Erfüllen eines gegebenen Auftauprotokolls;
das zweite karussellförmige Element (83) eine seitliche Ausnehmung aufweist, die einen Zugang des Linearmanipulators (39) zu den von dem ersten karussellförmigen Element (23) getragenen Aufnahmen (69) ermöglicht.

2. Vorrichtung nach Anspruch 1, wobei die Verbrauchsmaterialien mehrere Lösungen umfassen, die dafür gestaltet sind, Kristallisation der biologischen Materialien im Verlauf des Platzierens der biologischen Materialien in die Vorrichtung zu verhindern.

3. Vorrichtung nach Anspruch 1, wobei die Verbrauchsmaterialien mehrere Lösungen umfassen, die zum allmählichen Auftauen des biologischen Materials im Verlauf seiner Entnahme aus der Vorrichtung gestaltet sind.

4. Vorrichtung nach Anspruch 3, umfassend ein ersetzbares Einwegelement (83a) mit Aufnahmen (97), die die Verbrauchsmaterialien fassen und auf dem zweiten karussellförmigen Element (83) montierbar sind.

5. Vorrichtung nach Anspruch 1, wobei das erste karussellförmige Element (23) eine Eintritts- und Austrittsstation (61) umfasst, die wenigstens eine Aufnahme (63) zum Platzieren der Halter für biologisches Material aufweist, die in die Aufnahmen (69) des karussellförmigen Elements (23) platziert oder daraus entnommen werden sollen.

6. Vorrichtung nach Anspruch 1, umfassend einen Schwimmer, der zum Messen eines Pegels des Kryogens in dem abgedichteten Tieftemperatur-Dewargefäß (10) gestaltet ist.

7. Vorrichtung nach Anspruch 1, wobei der Linearmanipulator (39) einen magnetischen Haken umfasst, der zum Greifen, Befördern und Freigeben der Behälter für biologisches Material gestaltet ist.

8. Vorrichtung nach Anspruch 1, umfassend eine Antenne zum Identifizieren der Behälter für biologisches Material, die mit RFID-Tags versehen sind.

9. Verfahren zum Lagern biologischer Materialien; wobei das Verfahren die Schritte umfasst:
a. Bereitstellen einer Tieftemperaturvorrichtung zum Lagern biologischer Materialien; wobei die Vorrichtung umfasst:
i. ein abgedichtetes Tieftemperatur-Dewargefäß (10), das ein verflüssigtes Kryogen in einem Innenraum davon fasst;
ii. einen Kryokühler (20), gestaltet zum Wiederverflüssigen einer verdampften Phase des verflüssigten Kryogens;
iii. ein erstes karussellförmiges Element (23), das in einem abgedichteten Tieftemperatur-Dewargefäß (10) montiert ist; wobei das erste karussellförmige Element Aufnahmen (69) trägt, die zum Aufnehmen und Lagern von Behältern für biologisches Material gestaltet sind; wobei das karussellförmige Element eine Drehachse aufweist und darum drehbar ist;
iv. eine Lade- und Entnahmeanordnung (30), umfassend einen Linearmanipulator (39), der zum Laden der Behälter für biologisches Material in die Aufnahmen (69) und Entnehmen der Behälter für biologisches Material daraus gestaltet ist;
**dadurch gekennzeichnet, dass**
die Lade- und Entnahmeanordnung (30) um eine Achse (145) drehbar ist, die bei R₁ von der Drehachse des Karussellelements (23) an einem Arm mit der Länge R₂ angeordnet ist;
die Aufnahmen (69) innerhalb eines ringförmigen Bereichs angeordnet sind, der durch zwei koaxial angeordnete Umfänge mit Radien von R₁-R₂ und R₁+R₂ definiert ist;
die Lade- und Entnahmeanordnung ferner eine Vitrifizierungs- und Auftau-Teilanordnung umfasst, die ferner ein Gehäuse mit einer öffenbaren Tür (37) und einem zweiten karussellförmigen Element (83), das drehbar darin angeordnet ist, umfasst;
das zweite karussellförmige Element (83) Behälter (97) trägt, die zum Fassen von Vitrifizierungs- oder Auftau-Verbrauchsmaterialien zum Vitrifizieren oder Auftauen von Behältern für biologisches Material, die in die Tieftemperaturumgebung platziert oder daraus entnommen werden sollen, gestaltet sind, und wenigstens eine Heizung zum Erwärmen des Auftau-Verbrauchsmaterials auf eine vorgegebene Temperatur zum Erfüllen eines gegebenen Auftauprotokolls;
das zweite karussellförmige Element (83) eine seitliche Ausnehmung aufweist, die einen Zugang des Linearmanipulators (39) zu den von den ersten karussellförmigen Element (23) getragenen Aufnahmen (69) ermöglicht;
b. Vitrifizieren der biologischen Materialien, die in den Behältern für biologisches Material in der Vitrifizierungs- und Auftau-Teilanordnung untergebracht sind;
c. Befördern der vitrifizierten Behälter für biologisches Material mit vitrifizierten biologischen Materialien aus der Vitrifizierungs- und Auftau-Teilanordnung in das abgedichtete Tieftemperatur-Dewargefäß (100);
d. Platzieren der Behälter für biologisches Material in den Aufnahmen (69) des ersten karussellförmigen Elements (23);
e. Lagern der Behälter für biologisches Material;
f. Entnehmen der Behälter für biologisches Material aus dem abgedichteten Tieftemperatur-Dewargefäß (10); und
g. Auftauen der biologischen Materialien, die in den Behältern für biologisches Material in der Vitrifizierungs- und Auftau-Teilanordnung untergebracht sind;
wobei das Verfahren einen Schritt des linearen Bewegens des zweiten karussellförmigen Elements (83) zwischen einer ersten und einer zweiten Position umfasst; wobei in der ersten Position das zweite karussellförmige Element nach außen freigelegt ist, indem die öffenbare Tür (37) geöffnet ist und Verbrauchsmaterialien (97) in das zweite karussellförmige Element geladen und von diesem entladen werden; die biologischen Materialien, die in Behältern für biologisches Material aufgenommen sind, mit dem Linearmanipulator (39) verbunden oder davon getrennt werden; in der zweiten Position die öffenbare Tür (37) geschlossen ist, das zweite karussellförmige Element (83) in Koordination mit dem Linearmanipulator (39) positioniert ist, so dass die Behälter für biologisches Material, die die biologischen Materialien enthalten, durch den Linearmanipulator im Verlauf der Vitrifizierung des biologischen Materials in die vitrifizierenden Verbrauchsmaterialien von Interesse einführbar sind oder im Verlauf des Auftauens der biologischen Materialien aus der Vorrichtung in den Heizer einführbar sind.

10. Verfahren nach Anspruch 9, wobei der Schritt des Beförderns der Behälter für vitrifiziertes biologisches Material Ausrichten der seitlichen Ausnehmung des zweiten karussellförmigen Elements (83) relativ zu dem Tieftemperatutrventil (35) umfasst, um den Zugang des Linearmanipulators (39) zu den Aufnahmen (69) des ersten karussellförmigen Elements (23) bereitzustellen.

## Revendications

1. Dispositif cryogénique permettant de vitrifier, stocker et décongeler des matériaux biologiques ; ledit dispositif comprenant :
a. un vase Dewar cryogénique étanche (10) accueillant un cryogène liquéfié dans un espace interne de celui-ci ;
b. un cryorefroidisseur (20) configuré pour reliquéfier une phase vaporisée dudit cryogène liquéfié ;
c. un premier élément en forme de carrousel (23) monté dans un vase Dewar cryogénique étanche (10) ; ledit premier élément en forme de carrousel transportant des réceptacles (69) configurés pour recevoir et stocker des contenants de matériaux biologiques ; ledit élément en forme de carrousel ayant un axe de rotation et pouvant tourner autour de celui-ci ;
d. un agencement de chargement et de récupération (30) comprenant un manipulateur linéaire (39) configuré pour charger lesdits contenants de matériaux biologiques dans lesdits réceptacles (69) et récupérer à partir de ceux-ci lesdits contenants de matériaux biologiques et une vanne cryogénique (35) configurée pour isoler ledit vase Dewar cryogénique étanche (10) d'un environnement et pouvant être ouverte pour charger et récupérer lesdits contenants de matériaux biologiques ;
**caractérisé en ce que**
ledit agencement de chargement et de récupération (30) peut tourner autour d'un axe (145) disposé au niveau de R₁ à partir dudit axe de rotation dudit premier élément de carrousel (23) sur un bras de longueur R₂ ;
lesdits réceptacles (69) sont situés à l'intérieur d'une zone annulaire définie par deux circonférences de rayons disposées coaxialement de R₁ - R₂ et R₁ + R₂ ;
ledit agencement de chargement et de récupération comprend en outre un sous-agencement de vitrification et de décongélation comprenant en outre un boîtier ayant une porte pouvant être ouverte (37) et un second élément en forme de carrousel (83) disposé de manière rotative à l'intérieur de celui-ci ;
ledit second élément en forme de carrousel (83) transporte des contenants (97) configurés pour accueillir des consommables de vitrification ou de décongélation pour vitrifier ou décongeler des contenants de matériaux biologiques à placer dans ou à récupérer à partir de l'environnement cryogénique et au moins un élément chauffant pour chauffer le consommable de décongélation à une température prédéfinie permettant de respecter un protocole de décongélation donné ;
ledit second élément en forme de carrousel (83) a un évidement latéral permettant que ledit manipulateur linéaire (39) accède auxdits réceptacles (69) transportés par ledit premier élément en forme de carrousel (23).

2. Dispositif selon la revendication 1, dans lequel lesdits consommables comprennent un certain nombre de solutions configurées pour empêcher la cristallisation desdits matériaux biologiques au cours dudit placement desdits matériaux biologiques dans ledit dispositif.

3. Dispositif selon la revendication 1, dans lequel lesdits consommables comprennent un certain nombre de solutions configurées pour décongeler progressivement ledit matériau biologique au cours de la récupération de celui-ci à partir dudit dispositif.

4. Dispositif selon la revendication 3 comprenant un élément jetable remplaçable (83a) ayant des réceptacles (97) accueillant lesdits consommables et pouvant être monté sur ledit second élément en forme de carrousel (83).

5. Dispositif selon la revendication 1, dans lequel ledit premier élément en forme de carrousel (23) comprend un poste d'entrée et de sortie (61) ayant au moins un réceptacle (63) pour placer lesdits organes de maintien de matériaux biologiques à placer à l'intérieur desdits réceptacles (69) dudit élément en forme de carrousel (23) ou à retirer de ceux-ci.

6. Dispositif selon la revendication 1 comprenant un flotteur configuré pour mesurer un niveau dudit cryogène à l'intérieur dudit vase Dewar cryogénique étanche (10).

7. Dispositif selon la revendication 1, dans lequel ledit manipulateur linéaire (39) comprend un crochet magnétique configuré pour saisir, transporter et libérer lesdits contenants de matériaux biologiques.

8. Dispositif selon la revendication 1 comprenant une antenne pour identifier lesdits contenants de matériaux biologiques pourvus d'étiquettes RFID.

9. Procédé de stockage de matériaux biologiques ; ledit procédé comprenant les étapes de :
a. fourniture d'un dispositif cryogénique permettant de stocker des matériaux biologiques ; ledit dispositif comprenant :
i. un vase Dewar cryogénique étanche (10) accueillant un cryogène liquéfié dans un espace interne de celui-ci ;
ii. un cryorefroidisseur (20) configuré pour reliquéfier une phase vaporisée dudit cryogène liquéfié ;
iii. un premier élément en forme de carrousel (23) monté à l'intérieur d'un vase Dewar cryogénique étanche (10) ; ledit premier élément en forme de carrousel transportant des réceptacles (69) configurés pour recevoir et stocker des contenants de matériaux biologiques ; ledit élément en forme de carrousel ayant un axe de rotation et pouvant tourner autour de celui-ci ;
iv. un agencement de chargement et de récupération (30) comprenant un manipulateur linéaire (39) configuré pour charger lesdits contenants de matériaux biologiques dans lesdits réceptacles (69) et récupérer lesdits contenants de matériaux biologiques à partir de ceux-ci ;
**caractérisé en ce que**
ledit agencement de chargement et de récupération (30) peut tourner autour d'un axe (145) disposé au niveau de R₁ à partir dudit axe de rotation dudit élément de carrousel (23) sur un bras de longueur R₂ ;
lesdits réceptacles (69) sont situés à l'intérieur d'une zone annulaire définie par deux circonférences de rayons disposées coaxialement de R₁ - R₂ et R₁ + R₂ ;
ledit agencement de chargement et de récupération comprend en outre un sous-agencement de vitrification et de décongélation comprenant en outre un boîtier ayant une porte pouvant être ouverte (37) et un second élément en forme de carrousel (83) disposé de manière rotative à l'intérieur de celui-ci ;
ledit second élément en forme de carrousel (83) transporte des contenants (97) configurés pour accueillir des consommables de vitrification ou de décongélation pour vitrifier ou décongeler des contenants de matériaux biologiques à placer dans ou à récupérer à partir de l'environnement cryogénique et au moins un élément chauffant pour chauffer le consommable de décongélation à une température prédéfinie permettant de respecter un protocole de décongélation donné ;
ledit second élément en forme de carrousel (83) a un évidement latéral permettant que ledit manipulateur linéaire (39) accède auxdits réceptacles (69) transportés par ledit premier élément en forme de carrousel (23) ;
b. vitrification desdits matériaux biologiques accueillis à l'intérieur desdits contenants de matériaux biologiques à l'intérieur dudit sous-agencement de vitrification et de décongélation ;
c. transport desdits contenants de matériaux biologiques vitrifiés avec des matériaux biologiques vitrifiés provenant dudit sous-agencement de vitrification et de décongélation dans ledit vase Dewar cryogénique étanche (100) ;
d. placement desdits contenants de matériaux biologiques dans lesdits réceptacles (69) dudit premier élément en forme de carrousel (23) ;
e. stockage desdits contenants de matériaux biologiques ;
f. récupération desdits contenants de matériaux biologiques à partir dudit vase Dewar cryogénique étanche (10) ; et
g. décongélation desdits matériaux biologiques accueillis à l'intérieur desdits contenants de matériaux biologiques à l'intérieur dudit sous-agencement de vitrification et de décongélation ;
dans lequel ledit procédé comprend une étape de déplacement linéaire dudit second élément en forme de carrousel (83) entre des première et seconde positions ; dans ladite première position, ledit second élément en forme de carrousel est projeté vers l'extérieur par le biais de ladite porte pouvant être ouverte (37) qui est ouverte et les consommables (97) sont chargés dans ledit second élément de carrousel et déchargés de celui-ci ; lesdits matériaux biologiques accueillis dans des contenants de matériaux biologiques sont branchés audit manipulateur linéaire (39) ou débranchés de celui-ci ; dans ladite seconde position, ladite porte pouvant être ouverte (37) est fermée, ledit second élément en forme de carrousel (83) est positionné en coordination avec ledit manipulateur linéaire (39) de telle sorte que lesdits contenants de matériaux biologiques accueillant lesdits matériaux biologiques puissent être insérés par ledit manipulateur linéaire dans lesdits consommables de vitrification d'intérêt au cours de la vitrification dudit matériau biologique ou dans ledit élément chauffant au cours de la décongélation desdits matériaux biologiques à partir dudit dispositif.

10. Procédé selon la revendication 9, dans lequel ladite étape de transport desdits contenants de matériaux biologiques vitrifiés comprend l'orientation dudit évidement latéral du second élément en forme de carrousel (83) par rapport à ladite vanne cryogénique (35) afin de fournir ledit accès dudit manipulateur linéaire (39) auxdits réceptacles (69) dudit premier élément en forme de carrousel (23).
